# EUROPEAN PATENT APPLICATION

(11) **EP 4 043 905 A1**
(43) Date of publication of application: **17.08.2022**
(21) Application number: 21305184.0
(22) Date of filing: 11.02.2021
(51) Int. Cl.: G01S 5/00, G01S 5/02

(54) **METHOD FOR LOCATING A MOBILE DEVICE FROM ADVERTISING FRAMES**

(71) Applicant: Thales DIS France SA, 92190 Meudon (FR)
(72) Inventor: BUTON, Christophe, 92190 Meudon (FR); CAPOMAGGIO, Grégory, 92190 Meudon (FR); DELAGE, Frederic, 92190 Meudon (FR)
(74) Representative: Bricks, Amélie

(57) **Abstract**

The present invention relates to a method for locating a mobile device configured for broadcasting, according to a wireless communication protocol, advertising frames to be received by a plurality of scanners able to be connected to a backend server, wherein each advertising frame comprises a counter value incremented by the mobile device each time it broadcasts a new advertising frame,
said method comprising, performed by said backend server:
- receiving (S6), from each scanner of said plurality of scanners, a scan result value determined by said scanner from an advertising frame broadcasted by said mobile device and received by said scanner, and the counter value of said received advertising frame,
- determining (S7) a location of said mobile device based on said scan result values determined by said scanners from advertising frames with the same counter value.

## Description

### FIELD OF THE INVENTION

The present invention relates to the field of geolocation methods, and more particularly to a method for locating a mobile device from advertising frames broadcasted by the device and received by a plurality of scanners which does not rely on timestamps.

### BACKGROUND OF THE INVENTION

Geolocation of mobiles devices equipped with radio-frequency communication means usually relies on the determination of a distance between a mobile device and a plurality of reference points whose position is well known. For example a precise geo location of GSM mobile devices can be performed by determining the distance between the GSM mobile device and GSM antennas of the GSM network.

Existing geolocation solutions usually include a plurality of fix devices, scattered in a geolocation area where mobile equipment should be geolocated, in charge of listening to frames transmitted by a mobile device to be geolocated according to a predefined RF protocol such as GSM, Wifi, Bluetooth, Bluetooth Low Energy etc... Such fix devices may be called scanners.

In order to minimize the energy consumption at the mobile device, the frames transmitted by the mobile device can simply be advertising frames broadcasted by the mobile device without setting up a communication link between the mobile device and the scanners. By doing so, geolocation can be performed using very simple mobile devices such as Bluetooth Low energy beacons in order to extend the lifetime of such devices between two charges of their batteries.

In such solutions, geolocation of the mobile may be performed by trilateration based on frames received by at least three different scanners. In such a case, the distance between the mobile device and each of the scanners may be determined from the Received Signal Strength Indication (RSSI) indicating the strength of the advertising signal received from the beacon at each scanner, which may easily be converted to a distance indication. In order to achieve geolocation of a mobile device by such a technique despite movements of the mobile device, the geolocation system needs to make sure that RSSI or distance values provided by the different scanners have all been determined from frames broadcasted by the mobile device at the same time or within a very short period of time. In order to do so, the scanners provide to the geolocation system timestamps of receiving time of the frames from the mobile device. In order to be accurate, such solutions require the clocks of all the scanners to be synchronized. Such a synchronization may for example be achieved by having a reference server providing a reference time and by periodically synchronizing the clock of each scanner with this reference time.

Such solutions based on timestamps also require that the scanners have a high processing speed and buffers large enough to avoid missing any frame transmitted by the beacon, which may prove difficult when a large amount of beacons broadcast frames in the vicinity of the scanner. In addition, in case of a large discrepancy between the distances from the mobile device to the multiple scanners, it also requires to take into account the difference in the time of reception of a given single frame at the multiple scanners.

Consequently, there is a need for a geolocation solution enabling to achieve a good accuracy despite movements of the mobile devices to be geolocated without relying on timestamps and without requiring a synchronization of scanners clocks.

### SUMMARY OF THE INVENTION

For this purpose and according to a first aspect, this invention therefore relates to a method for locating a mobile device configured for broadcasting, according to a wireless communication protocol, advertising frames to be received by a plurality of scanners able to be connected to a backend server, wherein each advertising frame comprises a counter value incremented by the mobile device each time it broadcasts a new advertising frame, said method comprising, performed by said backend server:
- receiving, from each scanner of said plurality of scanners, a scan result value determined by said scanner from an advertising frame broadcasted by said mobile device and received by said scanner, and the counter value of said received advertising frame,
- determining a location of said mobile device based on said scan result values determined by said scanners from advertising frames with the same counter value.

By doing so, the backend server can differentiate an advertising frame from another and make sure to determine the location of the mobile device based on scan results determined by the scanners from the same advertising frame.

Said wireless communication protocol may be among a Bluetooth Low Energy communication protocol or a Ultra Wide Band communication protocol.

According to a first embodiment, said scan result value may comprise a Received Signal Strength Indication (RSSI) value of a signal broadcasted by said mobile device and carrying said advertising frame from which the scan result value is determined.

Such a RSSI value depends on the distance between the mobile device and the scanner, and may therefore be used by the backend server to determine the distance between the mobile device and the scanner whose position is well-known.

According to a second embodiment, said scan result value may comprise a distance between said mobile device and said scanner determined by said scanner from a Received Signal Strength Indication (RSSI) value of a signal broadcasted by said mobile device and carrying said advertising frame from which the scan result value is determined.

According to a third embodiment, said scan result value may comprise an angle between a direction along which was received said advertising frame from which said scan result value has been determined and a predetermined direction.

According to a second aspect, this invention therefore relates also to a computer program product directly loadable into the memory of at least one computer, comprising software code instructions for performing the steps of the method according to the first aspect when said computer program product is run on the at least one computer.

According to a third aspect, the invention is also related to a backend server comprising a processor and an interface configured to perform the steps of the method according to the first aspect.

According to a fourth aspect, the invention is also related to a system comprising a backend server according to the third aspect, a plurality of scanners and a mobile device.

Said mobile device may among a RF device, a UWB device and a BLE device.

Said mobile device may be among a smartcard, a mobile phone, a laptop, a keyfob, a wristband or a vehicle.

### BRIEF DESCRIPTION OF THE DRAWINGS

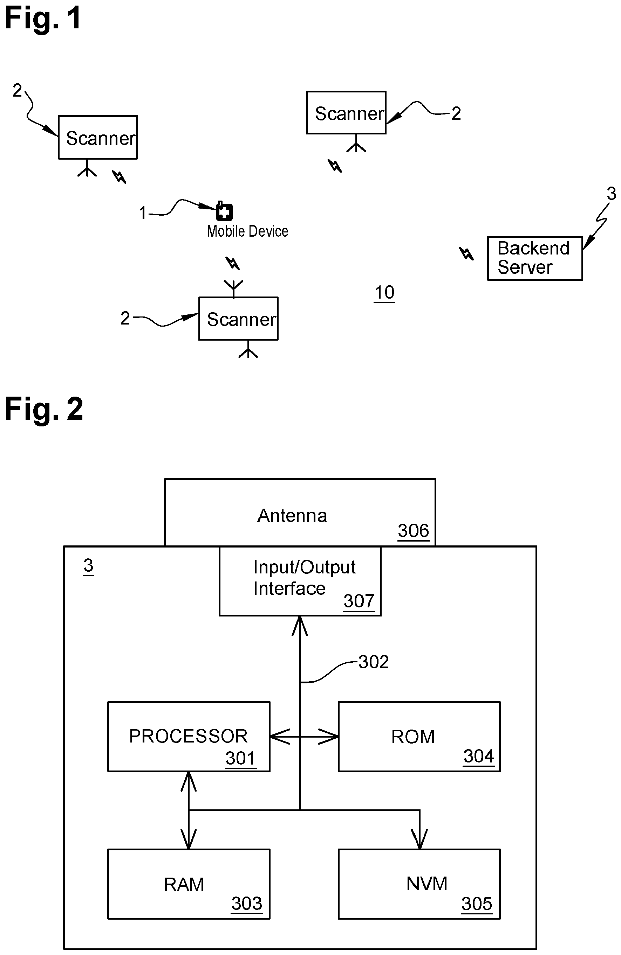

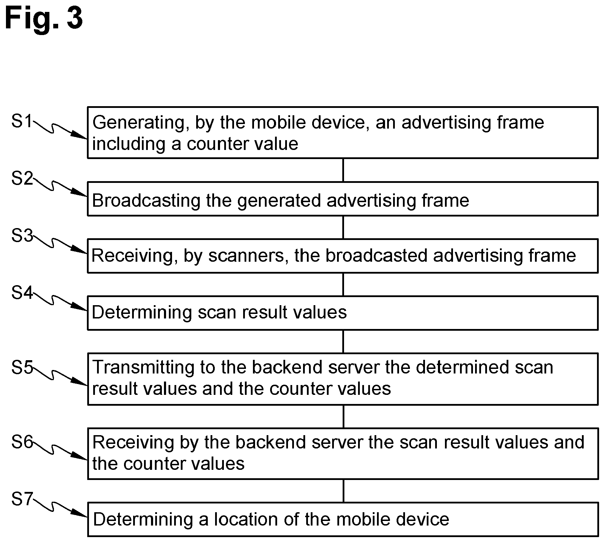

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
▪ Figure 1 is a schematic illustration of a system according to an embodiment of the present invention;
▪ Figure 2 is a schematic illustration of a backend server according to an embodiment of the present invention;
▪ Figure 3 illustrates schematically a method for locating a mobile device according to an embodiment of the present invention.

### DETAILED DESCRIPTION OF EMBODIMENTS OF THE INVENTION

The invention relates to a method and a system for locating a mobile device configured for broadcasting advertising frames according to a wireless protocol.

Such a wireless protocol may for example be a radiofrequency (RF) protocol among GSM, Bluetooth, Bluetooth Low Energy (BLE), Ultra Wide Band (UWB), Wifi, Zigbee...

The mobile device to be located may be any mobile device equipped with wireless communication means able to broadcast advertising frames. It may for example be a smartcard, a mobile phone, a laptop, a connected object such as a keyfob or a wristband, or even a bigger device such as a vehicle.

The mobile device to be located may also be a very simple beacon bound to another object and configured for doing almost nothing more than broadcasting such advertising frames in order to make this object locatable while minimizing the energy required to do so. By doing so, an object equipped with a small battery can be locatable for months without any charge. When such a low energy consumption is sought, the advertising frames are preferably broadcasted by the mobile device using a low-energy protocol such as BLE or Zigbee.

As shown on **Figure 1**, the system 10 according to the invention includes a plurality of scanners 2 configured for receiving the advertising frames broadcasted by the mobile device 1. Such scanners may be spread across an area in which the mobile device should be locatable. They are configured for listening to advertising frames emitted by mobile devices in their vicinity.

The system 10 also comprises a backend server 3 connected to each of the scanners. This backend server is in charge of determining the location of the mobile device from information provided by the scanners. Such a server may for example be a dedicated machine or a cloud service. It may store a database recording all the information transmitted by the scanners.

**Figure 2** is a schematic illustration of such a backend server 3. It may include computation means such as a CPU or a processor 301 connected via a bus 302 to a random access memory (RAM) 303, a read-only memory (ROM) 304, and/or a nonvolatile memory (NVM) 305. The user device may further include a network interface 306 used to connect the entity to various forms of wireless networks, e.g., wide-area networks, WiFi networks, or mobile telephony networks. Alternatively, the backend server may connect to networks via wired network connections such as Ethernet. The backend server may also include an input/output interface 307 providing interfaces to the user of the device, such as one or more screens, loudspeakers, a mouse, tactile surfaces, a keyboard etc...

As described above, when a scanner receives an advertising frame from a mobile device, it can determine a Received Signal Strength Indication (RSSI) indicating the strength of the advertising received signal. From this RSSI, the distance between the scanner and the mobile device which emitted the frame can be retrieved. Then the backend server can estimate the location of the mobile device from RSSI values or scanner to mobile device distance values from at least three different scanners which received the same advertising frame broadcasted by the mobile device. Alternatively, a scanner can determine from a received advertising frame an angle between a reception direction along which it has received the advertising frame and a predetermined direction. Then the backend server can estimate the location of the mobile device from such angles from at least two different scanners which received the same advertising frame broadcasted by the mobile device. In order to increase the location determination accuracy the backend server may also combine RSSI values and such angles from at least two different scanners.

In order to determine the location of the mobile with accuracy, the backend server should perform such a determination based on information provided by at least two or three scanners corresponding to a single advertising frame broadcasted by the mobile device. It shouldn't try to determine the location of the mobile based on RSSI or distance or angle information corresponding to different advertising frames.

In order to make sure that the backend server performs such a location determination based on information corresponding to a single advertising frame, the main idea of the invention is to add in each advertising frame a counter value, which is incremented by the mobile device each time it broadcasts a new advertising frame. Such a counter can be used as an advertising frame identifier: each frame transmitted by a mobile device will comprise a counter value different from the counter value comprised in the other frames broadcasted by the same mobile device, before or after the current frame. Therefore, if each scanner transmits to the backend server, in addition to an RSSI or distance or angle value determined from a received advertising frame, the counter value of this frame, it enables the backend server to identify from which advertising frame each scanner has determined the information he sent, and to only use information determined from a single frame by the multiple scanners in order to determine the location of the mobile device.

The following paragraphs describe with more details the steps of the method according to the invention. In these paragraphs, a plurality of scanners 2 receive broadcasted frames from the mobile device 1. In order to determine a location of the mobile device, the plurality of scanners should include at least two or three scanners depending on the kind of data transmitted by the scanners to the backend server. Of course, the system according to the invention may comprise more than three scanners receiving advertising frames broadcasted by the mobile device and it may also comprise scanners which do not receive frames from the mobile device, for example because they are out of reach of the mobile device. Depending on the protocol used by the mobile device to broadcast, its range may indeed be limited to a few meters or a few dozens of meters.

In a first broadcasting step S1, the mobile device 1 generates an advertising frame. In this step, it includes in the advertising frame a counter value. This counter value is different than the counter value included in the previous advertising frame generated by the mobile device. For example it may be equal to the counter value comprised in the previous advertising frame plus one. In order to do so, the mobile device may store in an internal memory an internal counter, it may increment this counter each time it broadcasts a new frame, for example at the beginning of the first broadcasting step or when the frame is broadcasted, and it may during the first broadcasting step copy the current value of the internal counter in the advertising frame being generated.

In a second broadcasting step S2, the mobile device broadcasts the generated advertising frame.

In a first scanning step S3, each scanner of the plurality of scanners receives the broadcasted advertising frame. This advertising frame is carried by an electromagnetic signal broadcasted by the mobile device according to a given communication protocol and received by the scanner.

In a second scanning step S4, each scanner of the plurality of scanners determines a scan result value from the received advertising frame. In a first embodiment, the scan result value may comprise a Received Signal Strength Indication (RSSI) value of the signal carrying the advertising frame received at the first scanning step. Such a RSSI value depends on the distance between the scanner and the mobile device at the time it broadcasted the signal. In a second embodiment, the scan result value may comprise the distance between the mobile device and the scanner. The scanner may evaluate such a distance from the RSSI value of the signal carrying the advertising frame. In a third embodiment, the scan result value may comprise an angle between a direction along which the advertising frame was received and a predetermined direction. In a fourth embodiment, the scan result value may comprise a Received Signal Strength Indication (RSSI) value and such an angle.

In a third scanning step S5, each scanner of the plurality of scanners transmits to the backend server the scan result value determined at the second scanning step S4, and the counter value of the advertising frame received at the first scanning step S3 and from which the scan result value has been determined.

In a first location determination step S6, the backend server receives from each scanner of said plurality of scanners, a scan result value and the counter value of the advertising frame from which the scan result value has been determined.

In a second location determination step S7, the backend server determines the location of the mobile device based on the received scan result values which have been determined by the scanners from advertising frames with the same counter value. When the scan result values comprise RSSI values, the backend server may determine from a RSSI value the distance between the mobile device and the scanner that transmitted the RSSI value. Based on distance information between the mobile device and at least three scanners whose position is well-known by the backend server, the latter can apply any existing trilateration method to determine the position of the mobile device. When the scan result values comprise angles, the backend server may determine the location of the mobile device based on two reception angles of the same advertising frame by two scanners whose position is well-known by the backend server. The backend server may combine such angles with RSSI values when both are comprised in scan results transmitted by the scanners.

The steps S1 to S6 are periodically repeated with a frequency depending on the communication protocol used by the mobile device to broadcast its advertising frames. For example in the case of Bluetooth Low Energy, the period between two broadcast of advertising frame may be chosen between 20 ms and 10,24 s. Depending on the distance between each scanner and the mobile device and on the processing speed of the scanners, the backend server may experience some delay between the reception of all the scan result values relative to a given advertising frame from all the scanners. The backend server may even receive from some scanners scan result values relative to an advertising frame N before it has received from all the scanners the scan result values relative to the previous advertising frame N-1 broadcasted by the mobile device. The counter value transmitted by each scanner with the scan result values enables, at the second location determination step S7, the backend server, for determining the location of the mobile device, to be sure to use scan result values determined by the scanners from a single advertising frame.

As a result, the method according to the invention, and the associated system enables a backend server to perform an accurate location of a mobile device from an advertising frame broadcasted by the mobile device and received by multiples scanners, without requiring any timestamp of the frame reception by the scanners.

## Claims

1. A method for locating a mobile device (1) configured for broadcasting, according to a wireless communication protocol, advertising frames to be received by a plurality of scanners (2) able to be connected to a backend server (3), wherein each advertising frame comprises a counter value incremented by the mobile device each time it broadcasts a new advertising frame,
said method comprising, performed by said backend server (3):
- receiving (S6), from each scanner (2) of said plurality of scanners, a scan result value determined by said scanner from an advertising frame broadcasted by said mobile device and received by said scanner, and the counter value of said received advertising frame,
- determining (S7) a location of said mobile device (1) based on said scan result values determined by said scanners from advertising frames with the same counter value.

2. The method of claim 1, wherein said wireless communication protocol is among a Bluetooth Low Energy communication protocol or a Ultra Wide Band communication protocol.

3. The method of claim 1, wherein said scan result value comprises a Received Signal Strength Indication (RSSI) value of a signal broadcasted by said mobile device and carrying said advertising frame from which the scan result value is determined.

4. The method of claim 1, wherein said scan result value comprises a distance between said mobile device and said scanner determined by said scanner from a Received Signal Strength Indication (RSSI) value of a signal broadcasted by said mobile device and carrying said advertising frame from which the scan result value is determined.

5. The method of any one of claims 1 to 4, wherein said scan result value comprises an angle between a direction along which was received said advertising frame from which said scan result value has been determined and a predetermined direction.

6. A computer program product directly loadable into the memory of at least one computer, comprising software code instructions for performing the steps of any one of claims 1 to 5, when said computer program product is run on the at least one computer.

7. A backend server (3) comprising a processor (301) and an interface (307) configured to perform the steps of any one of claims 1 to 5.

8. A system (10) comprising a backend server (3) according to claim 7, a plurality of scanners (2) and a mobile device (1).

9. The system of claim 8, wherein said mobile device (1) is among a RF device, a UWB device and a BLE device.

10. The system of claim 8, wherein said mobile device (1) is among a smartcard, a mobile phone, a laptop, a keyfob, a wristband or a vehicle.
